# EUROPEAN PATENT SPECIFICATION

(11) **EP 4 477 432 B1**
(45) Date of publication and mention of the grant of the patent: **25.02.2026**
(21) Application number: 24181535.6
(22) Date of filing: 11.06.2024
(51) Int. Cl.: B60C 23/06, B60C 23/04

(54) **TIRE WITH A SET OF PRINTED SENSORS**
REIFEN MIT EINEM SATZ GEDRUCKTER SENSOREN
PNEU AVEC UN ENSEMBLE DE CAPTEURS IMPRIMÉS

(30) Priority: 14.06.2023 US 202363508054 P; 16.04.2024 US 202418636385
(43) Date of publication of application: 18.12.2024
(73) Proprietor: The Goodyear Tire & Rubber Company, Akron, OH 44316 (US)
(72) Inventor: DECOSTER, Yves Francois Claude, 6760 Ethe (BE)
(74) Representative: Kutsch, Bernd

(56) References cited:
- US-A1- 2021 252 924
- US-A1- 2023 008 775
- US-B2- 10 960 714
- US-B2- 11 285 766

## Description

### FIELD OF THE INVENTION

The invention relates to tires. More particularly, the invention relates to tires with sensors that sense various conditions within a tire. Specifically, the invention is directed to a tire that includes a set of sensors (e.g. shear and/or strain sensors) which are arranged on the innerliner of the tire that enables accurate determination of e.g. vertical load, longitudinal force, lateral force, dynamic rolling and/or cornering conditions on/of the tire.

### BACKGROUND OF THE INVENTION

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

It may often be desirable to mount electronic components to the tires either before or after curing. Such electronic components enable certain tire parameters to be monitored. For example, in the prior art, discrete electronic sensor units have been attached to the inside surface of the pneumatic tire, which is known as the tire innerliner, using an adhesive. Such sensors measure deformation of the sidewall of the tire to provide data which can be used to determine the load on the tire. Such data can be communicated to vehicle stability and/or braking systems to provide improved control of the vehicle, and can be used for monitoring or tracking driving behavior.

While prior art discrete electronic sensor units are acceptable for their intended purpose, it is desirable to improve the accuracy of measurements of tire sidewall deformation to determine different (e.g. load) conditions on the tire in a more precise and repeatable manner. By way of background, typical prior art deformation sensor units include a long, thin strip of conductive material arranged to form a zig-zag pattern of parallel lines, which is attached to a substrate material. An excitation voltage is applied to terminal ends of the strip and electrical resistance is then measured. The deformation of the tire at the location of the sensor may be calculated from the measured resistance, as known to those skilled in the art. Other deformation sensors known in the art involve measuring electrical capacitance of the conductive material or using optical fibers.

US 10,960,714 B2 describes a tire in accordance with the preamble of claim 1.

US 2003/008775 A1 describes a series of deformation sensor patches for the inner surface of sidewalls, each patch having multiple deformation sensors. The patches may be daisy-chained.

US 2021/252924 A1 describes daisy-chained sets of noise or vibration sensors.

US 11,285,766 B2 describes a set of daisy-chained sensors that may be pressure sensors.

### SUMMARY OF THE INVENTION

The present invention is defined by the scope of the independent claim. Preferred embodiments are defined by the dependent claims.

A first preferred aspect of the invention relates to a tire with printed sensors, comprising a pair of bead areas, a ground-contacting tread disposed radially outwardly of the pair of bead areas, a pair of sidewalls, including an inboard sidewall extending from a first one of the bead areas to the tread, and an outboard sidewall extending from a second one of the bead areas to the tread. The tire further comprises a carcass extending toroidally between each of the bead areas radially inwardly of the tread and an innerliner formed on an inside surface of the carcass. In addition, the tire comprises a set of sensors consisting of a plurality of sensors printed on the innerliner, wherein the plurality of sensors are printed in a sidewall zone of the inboard sidewall or in a sidewall zone of the outboard sidewall, the plurality of sensors being configured to measure deformation in the sidewall zone, the plurality of sensors being daisy-chained so that the set of sensors provides a single deformation signal, the single deformation signal being based on the measured deformations of the plurality of sensors.

A second preferred aspect of the present invention relates to a tire with printed sensors comprising a pair of bead areas, a ground-contacting tread disposed radially outwardly of the pair of bead areas, a pair of sidewalls, including an inboard sidewall extending from a first one of the bead areas to the tread, and an outboard sidewall extending from a second one of the bead areas to the tread. The tire further comprises a carcass extending toroidally between each of the bead areas radially inwardly of the tread and an innerliner formed on an inside surface of the carcass. In addition, the tire comprises a first set of sensors consisting of a plurality of sensors printed on the innerliner, wherein the plurality of sensors are printed in a sidewall zone of the inboard sidewall, a second set of sensors consisting of a plurality of sensors printed on the innerliner, wherein the plurality of sensors are printed in a sidewall zone of the outboard sidewall. The plurality of sensors of both the first and second set of sensors are configured to measure deformation in the respective sidewall zones of the inboard sidewall and of the outboard sidewall, and the plurality of sensors of each of the first and second set of sensors are daisy-chained so that the respective set of sensors provide first and second single deformation signals, the single deformation signals being the combination of the measured deformations of the respective plurality of sensors.

In the present documents, several embodiments are described. It is worthwhile noting that each feature described for a particular embodiment of an aspect of the invention may be equally applied to another aspect of the invention.

### DEFINITIONS

As used herein, the term "rubber" is intended to include both natural rubber compositions and synthetic rubber compositions. Specific examples of rubbers include neoprene (polychloroprene), polybutadiene (e.g., cis-1,4-polybutadiene), polyisoprene (e.g., cis-1,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile and methyl methacrylate. Other types of rubber include carboxylated rubber, silicon-coupled rubber, or tin-coupled star-branched polymers. Rubber may include (or consist of) green rubber.

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands of which the plies in the tire are comprised.

"Equatorial plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"Radial-ply tire" means a belted or circumferentially-restricted pneumatic tire in which the ply cords which extend from bead to bead are laid at cord angles between about 65 to about 90 degrees with respect to the equatorial plane of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Daisy chaining" means connecting (e.g. wiring) multiple devices are wired together in sequence (in series).

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### BRIEF DESCRIPTION OF THE DRAWINGS

The invention will be described by way of example and with reference to the accompanying drawings in which:
FIG. 1 is a schematic cross-sectional view of a portion of an exemplary embodiment of a tire prior to the forming of sensors on the innerliner, shown mounted on a wheel;
FIG. 2 s is a schematic cross-sectional view of a portion of the tire shown in FIG. 1 with printed sensors formed on the innerliner, comprising an exemplary embodiment of a tire with printed sensors of the present invention;
FIG. 3a is a schematic representation of an outboard side of the tire shown in FIG. 2;
FIG. 3b is a schematic representation of an end view of the tire shown in FIG. 3a;
FIG. 4 is a schematic representation of an outboard side of another exemplary embodiment of a tire with printed sensors of the present invention, shown mounted on a wheel;
FIG. 5 is a schematic representation of an exemplary embodiment of a printed shear sensor for the tire shown in FIG. 2 and/or FIG. 4; and
FIG. 6 is a schematic representation of an exemplary embodiment of a printed strain sensor for the tire shown in FIG. 2 and/or FIG. 4.

The reader's attention is drawn to the fact that the drawings are not to scale. Furthermore, for the sake of clarity, proportions between height, length and/or width may not have been represented correctly.

### DETAILED DESCRIPTION OF PREFERRED EMBODIMENTS OF THE INVENTION

Preferred embodiments of the present inventions are described herebelow.

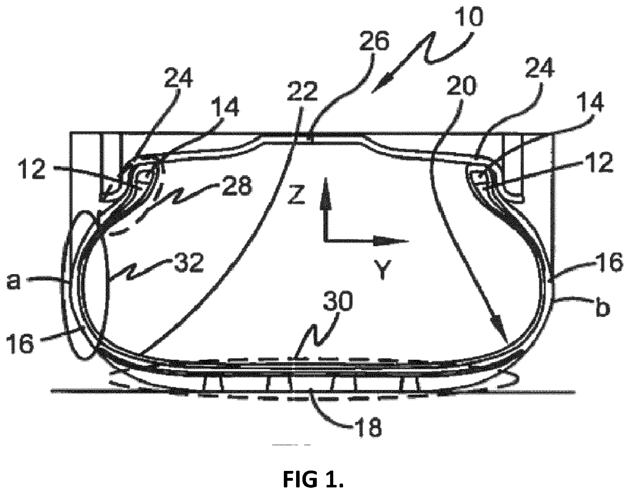

An exemplary embodiment of a tire 10 is shown in FIG. 1. The tire 10 includes a pair of bead areas 12, each one of which is formed with a bead core 14 that is embedded in the respective bead areas. Each one of a pair of sidewalls 16 extends radially outward from a respective bead area 12 to a ground-contacting tread 18. The tire 10 is reinforced by a carcass 20 that toroidally extends from one bead area, such as an inboard bead area 12a, to the other bead area, such as an outboard bead area 12b, also as known to those skilled in the art. The carcass includes multiple layers or plies, as known to those skilled in the art. An innerliner 22 is formed on the inner or inside surface of the carcass 20. The tire 10 is mounted on the flange 24 of a wheel or rim 26, as known in the art.

The tire 10 includes an inboard surface (i.e. non serial side) indicated generally by the letter "a" and an outboard surface (i.e. serial side) indicated generally by the letter "b". As a result, components at the tire inboard surface are denoted with an "a" designation and components at the tire outboard surface are denoted with a "b" designation. For example, the sidewall 16 at the inboard surface "a" of the tire 10 is an inboard sidewall 16a, and the sidewall at the outboard surface "b" of the tire is an outboard sidewall 16b.

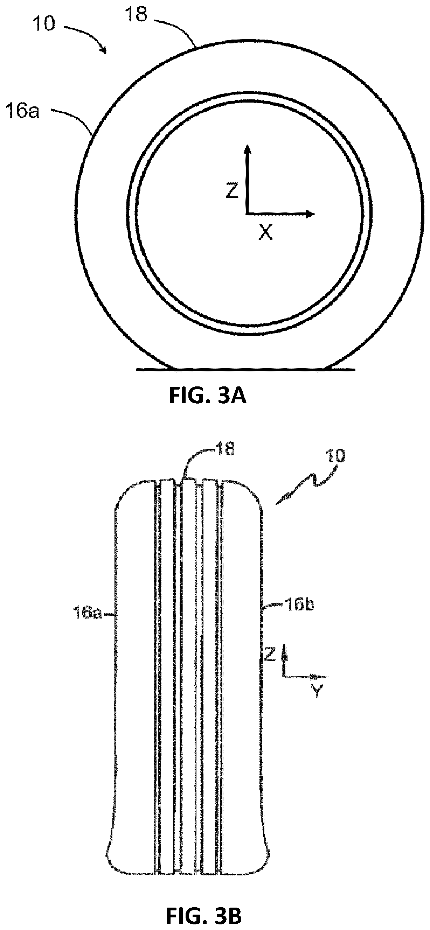

With reference to Figs. 3a and 3b, the tire 10 includes three perpendicular axes upon which forces act, including a "Y" axis extending in the axial or lateral direction, a "Z" axis extending in the radial or vertical direction, and an "X" axis extending in the longitudinal direction or direction of the travel of the tire.

The tire 10 also includes three zones with different levels of rigidity. A first or apex zone 28 is disposed at each respective bead area 12, a second or crown zone 30 is disposed at the tread 18, and a third or sidewall zone 32 is disposed at each respective sidewall 16 between the apex and crown zones. The sidewall zone 32 typically is less rigid and thus deforms more during rotation of the tire 10 than the apex zone 28 and the crown zone 30. As a result, measurement of deformation at the sidewall zone 32 is important.

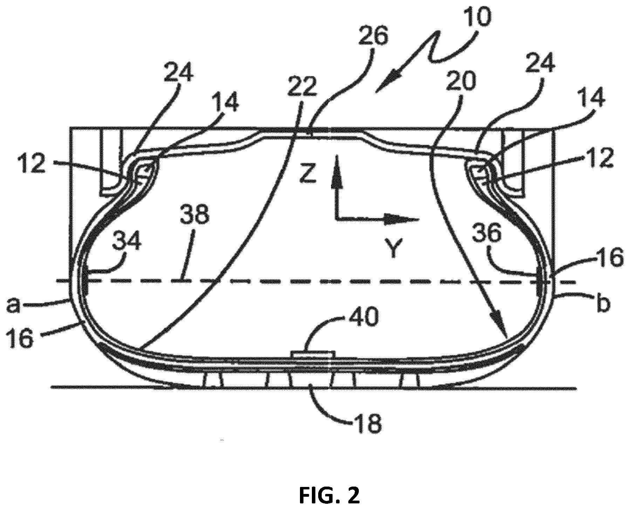

Turning to FIG. 2, in order to provide accurate and repeatable measurement of deformation at the sidewall zone 32, the tire 10 includes a first or inboard sensor 34. The inboard sensor 34 preferably is printed on the innerliner 22 at the sidewall zone 32 of the inboard sidewall 16a. The tire 10 also includes a second or outboard sensor 36. The outboard sensor 36 preferably is printed on the innerliner 22 at the sidewall zone 32 of the outboard sidewall 16b. The sensors 34 and 36 measure the deformation of the innerliner 22 at the sidewall zone 32 of each respective sidewall 16a and 16b, enabling the vertical loading of the tire 10 as well as the lateral force and the longitudinal force acting on the tire 10 to be determined.

The sensors 34 and 36 may be disposed in the same horizontal plane 38 extending laterally across the tire 10, and preferably are in (wired or wireless) communication with a TPMS unit 40, e.g. via wires or an antenna. The TPMS unit 40 preferably is attached to the innerliner 22 by an adhesive or other means known to those skilled in the art. The TPMS unit 40 typically includes an internal processor and an antenna or other communication means for communicating data to an external processor and/or to the local electronic device network or Controller Area Network (CAN bus) of the vehicle on which the tire 10 is mounted.

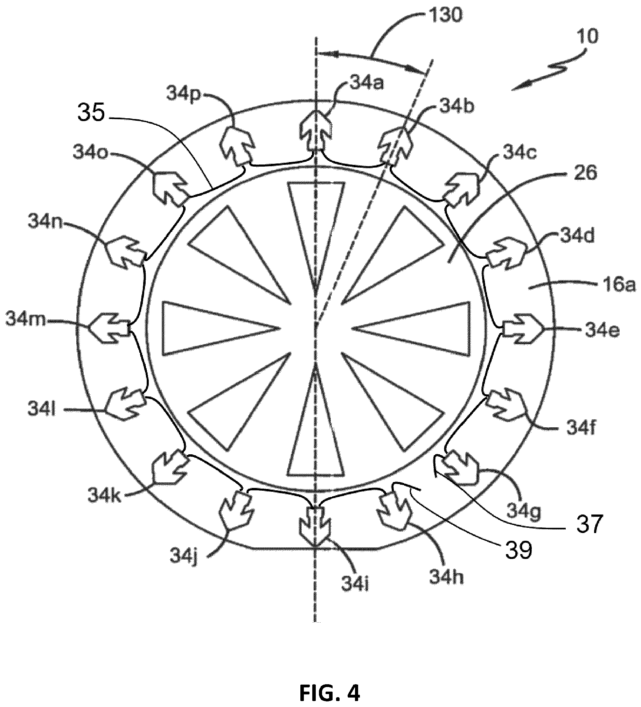

Turning now to FIG. 4, tire 10 includes a plurality of sensors indicated at 34a through 34p arranged, preferably printed, on the tire innerliner 22 (FIG. 1) in the sidewall zone 32 of the inboard sidewall 16a about the circumference of the tire 10. The sensors 34a through 34p preferably are evenly spaced apart, with an angular step or distance 130 between them. The sensors 34a-34p may cover the (substantially) entire surface of the sidewall zone 32. The tire also includes another plurality of sensors 36a through 36p arranged, preferably printed, on the tire innerliner 22 in the sidewall zone 32 of the outboard sidewall 16b about the circumference of the tire 10. The sensors of the other plurality of sensors may equally be evenly spaced apart, with an angular step or distance between them. In the following, the characteristics of the plurality of sensors34a to 34p may equally be applicable to the other plurality of sensors. The plurality of sensors 34a to 34p are daisy-chained (e.g. by wires) so that the set of sensors provides a single (electrical) deformation signal between terminals 37 and 39. The single deformation signal is, by design, based on the measured deformations of the plurality of sensors, in particular, it is the sum of the measured deformations of the plurality of sensors.

The TPMS unit 40 may thus receive the single (electrical) deformation signals from the sensors 34a-p and 36a-p and employ its processor to calculate the vertical loading, the lateral force and the longitudinal force acting on or of the tire 10, and transmit the calculated data to the vehicle control systems through the CAN bus (Controller Area Network bus). Alternatively, the TPMS unit 40 may transmit the single (electrical) deformation signal from the sensors 34a-p and 36a-p to an external processor for the calculation of the vertical loading, the lateral force and the longitudinal force acting on or of the tire 10, followed by transmission of the calculated data to the vehicle control systems through the CAN bus.

Each sensor preferably is directly printed on the innerliner 22 at the sidewall zone 32 of each respective inboard sidewall 16a and outboard sidewall 16b by ink-jet printing or by three-dimensional (3D) printing. The specific configuration and location of each sensor in the sidewall zone 32 depends upon the construction and size of the tire 10. Each sensor may be printed using a conductive ink 42 with a known electrical resistance, and which is flexible. The printing of each of the sensors 34a-p and 36a-p on the innerliner 22 is performed according to inkjet printing or 3D printing techniques that are known to those skilled in the art.

Alternatively, each sensor may be printed on a discrete substrate such as foil, rubber, plastic or a combination thereof. Preferably, the substrate is of a flexible and soft rubber-foil compound that has a short relaxation time, which enables each sensor to sense deformation of the tire 10. The combination substrate and the sensor may be attached to the innerliner at the sidewall zone 32 of each respective inboard sidewall 16a and outboard sidewall 16b using an adhesive, ultrasonic welding, or other techniques known to those skilled in the art. Stability of the conductive ink 42 over a range of temperatures enables attachment of the substrate and sensor 34 and 36 to the innerliner 22 before curing of the tire 10 or after curing of the tire. Installing a substrate and the sensor on an after-cured tire 10 enables each sensor to be manufactured independently of the tire and provides independent quality control for the sensors separate from the tire.

The sensors may be shear sensors or strain sensors.

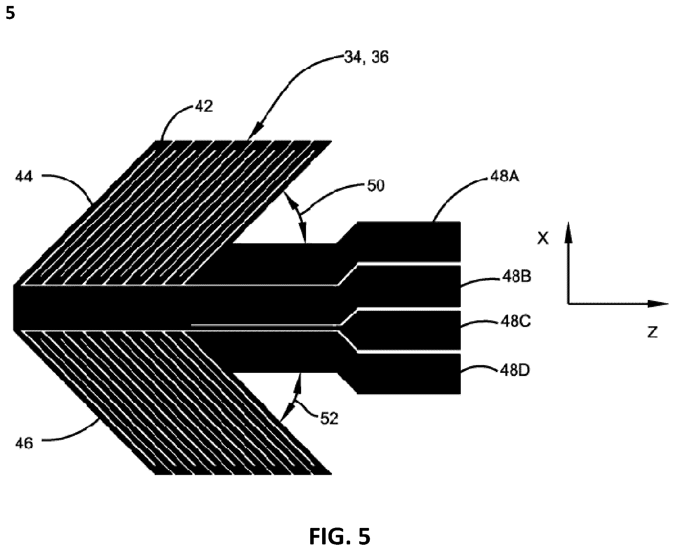

In case of shear sensors being used, shear sensors disclosed e.g. in US 10,960,714 are suitable. FIG. 5 shows such a shear sensor. In particular, the conductive ink 42 is deposited in a long, thin strip arranged to form a first set of parallel elements 44, a second set of parallel elements 46 and a plurality of terminals 48A through 48D. The first set of parallel elements 44 is oriented at a first angle 50 relative to the Z axis, while the second set of parallel elements 46 is oriented at a second angle 52 relative to the Z axis that is the opposite or negative of the first angle. Preferably, the first angle 50 is about 45 degrees relative to the Z axis and the second angle 52 is about -45 degrees relative to the Z axis. A first terminal 48A provides a connection to the first set of parallel elements 44 and a fourth terminal 48D provides a connection to the second set of parallel elements 46. A second terminal 48B is disposed parallel to the Z axis between the first set of parallel elements 44 and the second set of parallel elements 46, and a third terminal 48C is disposed parallel to the Z axis between the second terminal and the fourth terminal 48D. The first set of parallel elements 44 provides a signal in a positive direction along the X axis and Z axis direction, which is referred to as positive shear. The second set of parallel elements 46 provides a signal in a negative direction along the X axis and Z axis direction, which is referred to as negative shear.

Each shear sensor is capable of delivering at least three signals. A first signal, 48A:48B, is a positive shear signal, which is a measurement of shear strain between the first terminal 48A and the second terminal 48B. A second signal, 48B:48D, is a negative shear strain signal, which is a measurement of shear strain between the second terminal 48B and the fourth terminal 48D. A third signal, 48B:48C, is a reference signal that is a measurement between the second terminal 48B and the third terminal 48C, which are both parallel to the Z axis.

The shear sensors may be daisy-chained in such a way that terminal 48A of a first sensor is connected to terminal 48D of an adjacent sensor. All the sensors of a set of sensors are connected in such way so that only one terminal 48A and only one terminal 48D remain unconnected to another sensor. The two remaining terminals provide the single deformation signal being a single shear deformation signal. Such single deformation signal may be provided to the TPMS via wires or possible wireless communication (e.g. RF or Bluetooth low energy). Of course, in parallel, daisy-chaining terminals 48B and 48C in the same way as for terminals 48A and 48D is also possible so as to provide a reference signal.

In case of strain sensors being used, strain sensors disclosed e.g. in US 10,953,710 are suitable.

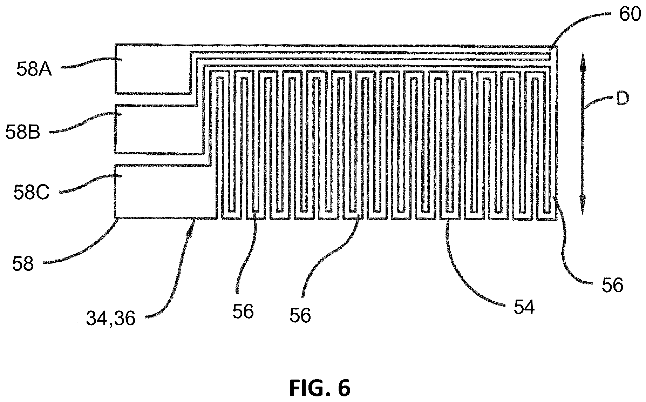

Turning now to FIG. 6 showing such a strain sensor, conductive ink 54 is deposited in a long, thin strip arranged to form a zigzag pattern of parallel elements 56 with a plurality of terminals 58 and a perpendicular element 60. The arrangement of parallel elements 56 increases the sensitivity of each sensor 34 and 36 in a specific direction or axis indicated by arrow D, which extends parallel to the parallel elements and is referred to herein as the sensitive axis.

The plurality of terminals 58 preferably includes a first terminal 58A, a second terminal 58B and a third terminal 58C. The perpendicular element 60 extends from the first terminal 58A in a direction perpendicular to the sensitive axis D. The zigzag pattern of elements 56 extends between the second terminal 58B and the third terminal 58C.

Preferably, each sensor 34 and 36 provides or delivers signals as determined by the arrangement of the elements 56 and the terminals 58. The first signal of each sensor 34 and 36, referred to herein as 58B:58C, is a measurement of strain between a first end of the zigzag pattern of elements 56 at the second terminal 58B and a second end of the zigzag pattern of elements at the third terminal 58C. The second signal of each sensor 34 and 36, referred to as 58A:58B, is a reference signal, which is a measurement between the perpendicular element 60 the first terminal 58A and the first end of the zigzag pattern of elements at the second terminal 58B. The first signal 58B:58C and the second signal 58A:58B are both proportional to the resistivity of the ink 54.

The strain sensors may be daisy-chained in such a way that terminal 58B of a first sensor is connected to terminal 58C of an adjacent sensor. All the sensors of a set of sensors are connected in such way so that only one terminal 58B and only one terminal 58C remain unconnected to another sensors. The two remaining terminals provide the single deformation signal being a single shear deformation signal. Such single deformation signal may be provided to the TPMS via wires or possible wireless communication (e.g. RF or Bluetooth low energy).

The TPMS may be configured to compute a dynamic vertical tire load based on a sum of the first and second single deformation signals. Also the TPMS may be configured to compute a cornering condition based on a difference between the first and second single deformation signals. Alternatively or additionally, as explained above, the single deformation signals may be transmitted remotely for a remote processing of the signals in order to determine said dynamic vertical tire load and/or said cornering condition.

## Claims

1. A tire with printed sensors (34, 36), the tire (10) comprising:
a pair of bead areas (12);
a ground-contacting tread (18) disposed radially outwardly of the pair of bead areas (12);
a pair of sidewalls (16), including an inboard sidewall extending from a first one of the bead areas (12) to the tread (18), and an outboard sidewall extending from a second one of the bead areas (12) to the tread (18);
a carcass (20) extending toroidally between each of the bead areas (12) radially inwardly of the tread (18);
an innerliner (22) formed on an inside surface of the carcass (20); and
a set of sensors (34, 36) consisting of a plurality of sensors printed on the innerliner (22), wherein the plurality of sensors (34, 36) are printed in a sidewall zone of the inboard sidewall and/or in a sidewall zone of the outboard sidewall;
wherein the plurality of sensors (34, 36) being configured to measure deformation in the sidewall zone;
**characterized in that** the plurality of sensors (34, 36) are daisy-chained so that the set of sensors (34, 36) provides a single deformation signal, the single deformation signal being based on the measured deformations of the plurality of sensors (34, 36).

2. The tire of claim 1 wherein the set of sensors (34, 36) is a first set of sensors (34) consisting of a plurality of sensors printed on the innerliner (22), wherein the plurality of sensors are printed in a sidewall zone of the inboard sidewall, and a second set of sensors (36) consisting of a plurality of sensors printed on the innerliner (22), wherein the plurality of sensors are printed in a sidewall zone of the outboard sidewall, wherein the plurality of sensors (34, 36) of both the first and second set of sensors are configured to measure deformation in the respective sidewall zones of the inboard sidewall and of the outboard sidewall, and wherein the plurality of sensors of each of the first and second set of sensors (34, 36) are daisy-chained so that the respective set of sensors provide first and second single deformation signals, the single deformation signals being the combination of the measured deformations of the respective plurality of sensors.

3. The tire according to claim 1 or 2, wherein the single deformation signal is the sum of the measured deformations of the plurality of sensors (34, 36).

4. The tire according to claim 1, 2 or 3, wherein each sensor (34, 36) is printed on the innerliner (22) by at least one of ink-jet and three-dimensional printing.

5. The tire according to at least one of the previous claims, wherein each sensor (34, 36) is printed directly on the innerliner (22).

6. The tire according to at least one of the previous claims 1 to 4, wherein each sensor (34, 36) is printed on a substrate that is attached to the innerliner (22).

7. The tire according to at least one of the previous claims, wherein the plurality of sensors (34, 36) is a plurality of shear sensors, the measured deformations being shear deformation, the single deformation signal being a single shear deformation signal.

8. The tire according to at least one of the previous claims 1 to 6, wherein the plurality of sensors (34, 36) is a plurality of strain sensors, the measured deformations being strain deformation, the single deformation signal being a single strain deformation signal.

9. The tire according to at least one of the previous claims, wherein the plurality of sensors (34, 36) includes a conductive ink with a known electrical resistance.

10. The tire according to at least one of the previous claims, wherein the plurality of printed sensors (34, 36) are arranged about the circumference of the tire (10).

11. The tire according to at least one of the previous claims, wherein the sensors of the plurality of printed sensors (34, 36) are substantially evenly spaced apart along the circumference of the tire (10).

12. The tire according to at least one of the previous claims, wherein each of the plurality of sensors (34, 36) comprises a first and a second terminal (37, 39), the first terminal (37) of each sensor of the plurality of sensors (34, 36) being electrically connected to the second terminal (39) of the following sensor of the plurality of sensors (34, 36) so as to daisy-chain the plurality of sensors, except a first terminal of a first sensor of the plurality of sensors that is not connected to a second terminal of a second sensor of the plurality of sensors, the first and second terminals being configured to provide the single deformation signal.

13. The tire according to at least one of the previous claims, wherein the set of sensors (34, 36) or the first and the second set of sensors is in electronic or wireless communication with a tire pressure monitoring system (40).

14. The tire of claim 13, wherein the tire pressure monitoring system (40) is configured to compute (i) a static tire load based on the single deformation signal; and/or (ii) a dynamic vertical tire load based on a sum of the first and second single deformation signals; and/or (iii) a cornering condition based on a difference between the first and second single deformation signals.

15. The tire according to claim 13 or 14, wherein the tire pressure monitoring system (40) is configured to compute a dynamic rolling condition based one the first and second single deformation signals and other first and second single deformation signals stored in tire pressure monitoring system, the other first and second single deformation signals being obtained without said dynamic rolling condition, the dynamic rolling condition being at least one of braking and acceleration.

## Patentansprüche

1. Reifen, der mit gedruckten Sensoren (34, 36) ausgestattet ist; wobei der Reifen (10) Folgendes umfasst:
ein Paar in Form von Wülsten vorliegende Bereiche (12);
eine den Boden berührende Lauffläche (18), die in der radialen Richtung außerhalb des Paars der in Form von Wülsten vorliegenden Bereiche (12) angebracht ist;
ein Paar Seitenwände (16), die eine innere Seitenwand, die sich von einem ersten Bereich, der aus den in Form von Wülsten vorliegenden Bereichen (12) ausgewählt ist, zur Lauffläche (18) erstreckt, und eine äußere Seitenwand, die sich von einem zweiten Bereich, der aus den in Form von Wülsten vorliegenden Bereichen (12) ausgewählt ist, zur Lauffläche (18) erstreckt;
eine Karkasse (20), die sich in der toroidalen Richtung zwischen jedem Bereich, der aus den in Form von Wülsten vorliegenden Bereichen (12) ausgewählt ist, in der radialen Richtung innerhalb der Lauffläche (18) erstreckt;
eine Innenschicht (22), die auf einer inneren Oberfläche der Karkasse (20) gebildet ist; und
einen Satz von Sensoren (34, 36), die aus einer Anzahl von Sensoren bestehen, die auf die Innenschicht (22) gedruckt sind; wobei die oben genannten mehreren Sensoren (34, 36) in einem Seitenwandbereich, der einen Teil der inneren Seitenwand bildet, und/oder in einem Seitenwandbereich, der einen Teil der äußeren Seitenwand bildet, gedruckt sind;
wobei die oben genannten mehreren Sensoren (34, 36) derart ausgestaltet sind, dass sie eine Verformung in dem Seitenwandbereich messen;
**dadurch gekennzeichnet, dass** die oben genannten mehreren Sensoren (34, 36) in Reihe geschaltet sind, sodass der Satz von Sensoren (34, 36) ein einzelnes Verformungssignal bereitstellt; wobei das einzelne Verformungssignal auf Basis der Verformungen der oben genannten mehreren Sensoren (34, 36), die gemessen wurden, beruht.

2. Reifen nach Anspruch 1, wobei der Satz von Sensoren (34, 36) einen ersten Satz von Sensoren (34) darstellt, der aus einer Anzahl von Sensoren besteht, die auf die Innenschicht (22) gedruckt sind; wobei die oben genannten mehreren Sensoren in einem Seitenwandbereich, der einen Teil der inneren Seitenwand bildet, gedruckt sind, und einen zweiten Satz von Sensoren (36) darstellt, der aus einer Anzahl von Sensoren besteht, die auf die Innenschicht (22) gedruckt sind; wobei die oben genannten mehreren Sensoren in einem Seitenwandbereich, der einen Teil der äußeren Seitenwand bildet, gedruckt sind; wobei die oben genannten mehreren Sensoren (34, 36) sowohl des ersten als auch des zweiten Satzes von Sensoren derart ausgestaltet sind, dass sie eine Verformung in den jeweiligen Seitenwänden messen, die einen Teil der inneren Seitenwand und einen Teil der äußeren Seitenwand bilden; und wobei die oben genannten mehreren Sensoren jedes Satzes des ersten und des zweiten Satzes von Sensoren (34, 36) in Reihe geschaltet sind, sodass der jeweilige Satz von Sensoren erste und zweite einzelne Verformungssignale darstellt; wobei die einzelnen Verformungssignale die Kombination der gemessenen Verformungen darstellen, die von den oben genannten jeweiligen mehreren Sensoren stammen.

3. Reifen nach Anspruch 1 oder 2, wobei das einzelne Verformungssignal die Summe der gemessenen Verformungen darstellt, die von den oben genannten mehreren Sensoren (34, 36) stammen.

4. Reifen nach Anspruch 1, 2 oder 3, wobei jeder Sensor (34, 36) auf die Innenschicht (22) mittels zumindest eines Drucks aufgedruckt ist, der aus Tintenstrahldruck und dreidimensionalem Druck ausgewählt ist.

5. Reifen nach zumindest einem der vorhergehenden Ansprüche, wobei jeder Sensor (34, 36) direkt auf die Innenschicht (22) gedruckt ist.

6. Reifen nach zumindest einem der vorhergehenden Ansprüche 1 bis 4, wobei jeder Sensor (34, 36) auf ein Substrat gedruckt ist, das an der Innenschicht (22) befestigt ist.

7. Reifen nach zumindest einem der vorhergehenden Ansprüche, wobei die oben genannten mehreren Sensoren (34, 36) eine Anzahl von Schersensoren darstellen; wobei die gemessenen Verformungen Scherverformungen darstellen; wobei das einzelne Verformungssignal ein einzelnes Signal einer Scherverformung darstellt.

8. Reifen nach zumindest einem der vorhergehenden Ansprüche 1 bis 6, wobei die oben genannten mehreren Sensoren (34, 36) eine Anzahl von Zugsensoren darstellen; wobei die gemessenen Verformungen Zugverformungen darstellen; wobei das einzelne Verformungssignal ein einzelnes Signal einer Zugverformung darstellt.

9. Reifen nach zumindest einem der vorhergehenden Ansprüche, wobei die oben genannten mehreren Sensoren (34, 36) eine leitfähige Tinte enthalten, die einen bekannten elektrischen Widerstand aufweist.

10. Reifen nach zumindest einem der vorhergehenden Ansprüche, wobei die oben genannten mehreren gedruckten Sensoren (34, 36) um den Umfang des Reifens (10) herum angebracht sind.

11. Reifen nach zumindest einem der vorhergehenden Ansprüche, wobei die Sensoren, die aus den mehreren gedruckten Sensoren (34, 36) ausgewählt sind, im Wesentlichen gleichmäßig entlang des gesamten Umfangs des Reifens (10) beabstandet sind.

12. Reifen nach zumindest einem der vorhergehenden Ansprüche, wobei jeder Sensor, der aus den oben genannten mehreren Sensoren (34, 36) ausgewählt ist, einen ersten und einen zweiten Anschluss (37, 39) umfasst; wobei der erste Anschluss jedes Sensors, der aus den oben genannten mehreren Sensoren (34, 36) ausgewählt ist, elektrisch mit dem zweiten Anschluss des nächsten Sensors, der aus den oben genannten mehreren Sensoren (34, 36) ausgewählt ist, verbunden ist, um die oben genannten mehreren Sensoren in Reihe zu schalten, mit Ausnahme eines ersten Anschlusses eines ersten Sensors, der aus den oben genannten mehreren Sensoren ausgewählt ist, der nicht mit einem zweiten Anschluss eines zweiten Sensors, der aus den oben genannten mehreren Sensoren ausgewählt ist, verbunden ist; wobei der erste und der zweite Anschluss derart ausgestaltet sind, dass sie das einzelne Verformungssignal bereitstellen.

13. Reifen nach zumindest einem der vorhergehenden Ansprüche, wobei der Satz von Sensoren (34, 36) oder der erste und der zweite Satz von Sensoren elektrisch oder drahtlos mit einem System (40) zur Überwachung des Reifendrucks verbunden ist oder sind.

14. Reifen nach Anspruch 13, wobei das System (40) zur Überwachung des Reifendrucks derart ausgebildet ist, dass es Folgendes berechnet : (i) eine statische Belastung, die auf den Reifen wirkt, auf der Basis des einzelnen Verformungssignals; und/oder (ii) eine dynamische vertikale Belastung, die auf den Reifen wirkt, auf der Basis einer Summe aus dem ersten und dem zweiten Verformungssignal; und/oder (iii) eine Fahrbedingung beim Durchfahren einer Kurve auf der Basis einer Differenz zwischen dem ersten und dem zweiten Verformungssignal.

15. Reifen nach Anspruch 13 oder 14, wobei das System (40) zur Überwachung des Reifendrucks derart ausgestaltet ist, dass es eine dynamische Fahrbedingung auf der Basis eines Verformungssignals, das aus dem ersten und dem zweiten Verformungssignal ausgewählt ist, und weiterer erster und zweiter Verformungssignale, die in dem System zur Überwachung des Reifendrucks gespeichert sind, berechnet; wobei die anderen ersten und zweiten Verformungssignale in Abwesenheit des oben genannten dynamischen Rollzustands erzielt werden; wobei der dynamische Rollzustand zumindest einen Zustand darstellt, der aus Bremsen und Beschleunigen ausgewählt ist.

## Revendications

1. Bandage équipé de capteurs imprimés (34, 36) ; dans lequel le bandage comprend :
une paire de zones faisant office de talons (12) ;
une bande de roulement (18) qui entre en contact avec le sol, disposée, dans la direction radiale, à l'extérieur de la paire de zones faisant office de talons (12) ;
une paire de flancs (16), qui englobe un flanc interne qui s'étend à partir d'une première zone parmi lesdites zones faisant office de talons (12) jusqu'à la bande de roulement (18), et un flanc externe qui s'étend à partir d'une deuxième zone parmi lesdites zones faisant office de talons (12) jusqu'à la bande de roulement (18) ;
une carcasse (20) qui s'étend, dans la direction toroïdale, entre chaque desdites zones faisant office de talons (12), dans la direction radiale, à l'intérieur de la bande de roulement (18) ;
un calandrage intérieur (22) qui est formé sur une surface interne de la carcasse (20) ; et
un jeu de capteurs (34, 36) qui sont constitués par un certain nombre de capteurs imprimés sur le calandrage intérieur (22) ; dans lequel lesdits plusieurs capteurs (34, 36) sont imprimés dans une zone de flanc faisant partie du flanc interne et/ou dans une zone de flanc faisant partie du flanc externe ;
dans lequel lesdits plusieurs capteurs (34, 36) sont configurés d'une manière telle qu'ils mesurent une déformation dans la zone de flanc ;
**caractérisé en ce que** lesdits plusieurs capteurs (34, 36) sont connectés en série d'une manière telle que le jeu de capteurs (34, 36) procure un signal unique de déformation ; dans lequel le signal unique de déformation se base sur les déformations mesurées qui proviennent desdits plusieurs capteurs (34, 36).

2. Bandage selon la revendication 1, dans lequel le jeu de capteurs (34, 36) représente un premier jeu de capteurs (34) qui est constitué par un certain nombre de capteurs qui sont imprimés sur le calandrage intérieur (22) ; dans lequel lesdits plusieurs capteurs sont imprimés dans une zone de flanc faisant partie du flanc interne, et un deuxième jeu de capteurs (36) qui est constitué par un certain nombre de capteurs qui sont imprimés sur le calandrage intérieur (22) ; dans lequel lesdits plusieurs capteurs sont imprimés dans une zone de flanc faisant partie du flanc externe ; dans lequel lesdits plusieurs capteurs (34, 36) à la fois du premier et du deuxième jeu de capteurs sont configurés d'une manière telle qu'ils mesurent une déformation dans les zones de flancs respectives faisant partie du flanc interne et faisant partie du flanc externe ; et dans lequel lesdits plusieurs capteurs de chaque jeu parmi le premier et le deuxième jeu de capteurs (34, 36) sont connectés en série d'une manière telle que le jeu respectif de capteurs procure des premiers et des deuxièmes signaux uniques de déformation ; dans lequel les signaux uniques de déformation représentent la combinaison des déformations mesurées qui proviennent desdits plusieurs capteurs respectifs.

3. Bandage selon la revendication 1 ou 2, dans lequel le signal unique de déformation représente la somme des déformations mesurées qui proviennent desdits plusieurs capteurs (34, 36).

4. Bandage selon la revendication 1, 2 ou 3, dans lequel chaque capteur (34, 36) est imprimé sur le calandrage intérieur (22) par l'intermédiaire d'au moins une impression qui est choisie parmi une impression par jet d'encre et une impression en trois dimensions.

5. Bandage selon au moins une des revendications précédentes, dans lequel chaque capteur (34, 36) est imprimé directement sur le calandrage intérieur (22).

6. Bandage selon au moins une des revendications précédentes 1 à 4, dans lequel chaque capteur (34, 36) est imprimé sur un substrat qui est fixé au calandrage intérieur (22).

7. Bandage selon au moins une des revendications précédentes, dans lequel lesdits plusieurs capteurs (34, 36) représentent un certain nombre de capteurs du cisaillement ; dans lequel les déformations mesurées représentent des déformations dues au cisaillement ; dans lequel le signal unique de déformation représente un signal unique de déformation due au cisaillement.

8. Bandage selon au moins une des revendications précédentes 1 à 6, dans lequel lesdits plusieurs capteurs (34, 36) représentent un certain nombre de capteurs de la tension ; dans lequel les déformations mesurées représentent des déformations dues à la tension ; dans lequel le signal unique de déformation représente un signal unique de déformation due à la tension.

9. Bandage selon au moins une des revendications précédentes, dans lequel lesdits plusieurs capteurs (34, 36) englobent une encre conductrice qui présente une résistance électrique connue.

10. Bandage selon au moins une des revendications précédentes, dans lequel lesdits plusieurs capteurs imprimés (34, 36) sont disposés autour de la circonférence du bandage (10).

11. Bandage selon au moins une des revendications précédentes, dans lequel les capteurs qui sont choisis parmi lesdits plusieurs capteurs imprimés (34, 36) sont espacés d'une manière essentiellement égale tout au long de la circonférence du bandage (10).

12. Bandage selon au moins une des revendications précédentes, dans lequel chaque capteur qui est choisi parmi lesdits plusieurs capteurs (34, 36) comprend une première et une deuxième borne (37, 39) ; dans lequel la première borne de chaque capteur qui est choisi parmi lesdits plusieurs capteurs (34, 36) est reliée par voie électrique à la deuxième borne du capteur suivant qui est choisi parmi lesdits plusieurs capteurs (34, 36) de façon à connecter lesdits plusieurs capteurs en série, à l'exception d'une première borne d'un premier capteur qui est choisi parmi lesdits plusieurs capteurs, qui n'est pas reliée à une deuxième borne d'un deuxième capteur qui est choisi parmi lesdits plusieurs capteurs ; dans lequel la première et la deuxième borne sont configurées d'une manière telle qu'elles procurent le signal unique de déformation.

13. Bandage selon au moins une des revendications précédentes, dans lequel le jeu de capteurs (34, 36) ou le premier et le deuxième jeu de capteurs est ou sont mis en communication par voie électrique ou sans fil avec un système (40) destiné à la surveillance de la pression du bandage.

14. Bandage selon la revendication 13, dans lequel le système (40) destiné à la surveillance de la pression du bandage est configuré d'une manière telle qu'il calcule : (i) une charge statique qui s'exerce sur le bandage en se basant sur le signal unique de déformation ; et/ou (ii) une charge verticale dynamique qui s'exerce sur le bandage en se basant sur une somme du premier et du deuxième signal de déformation ; et/ou (iii) une condition de conduite lors de la négociation d'un virage en se basant sur une différence entre le premier et le deuxième signal de déformation.

15. Bandage selon la revendication 13 ou 14, dans lequel le système (40) destiné à la surveillance de la pression du bandage est configuré d'une manière telle qu'il calcule une condition de roulage dynamique en se basant sur un signal de déformation qui est choisi parmi le premier et le deuxième signal de déformation et sur d'autres premiers et deuxièmes signaux de déformation qui sont stockés dans le système destiné à la surveillance de la pression du bandage ; dans lequel on obtient les autres premiers et deuxièmes signaux de déformation en l'absence de ladite condition de roulage dynamique ; dans lequel la condition de roulage dynamique représente au moins une condition qui est choisie parmi un freinage et une accélération.
